# EUROPÄISCHE PATENTANMELDUNG

(11) **EP 3 560 696 A1**
(43) Veröffentlichungstag der Anmeldung: **30.10.2019**
(21) Anmeldenummer: 18169800.2
(22) Anmeldetag: 27.04.2018
(51) Int. Cl.: B32B 5/00, B32B 7/12, B32B 27/10, B32B 27/32, B32B 27/34, B32B 27/36, B65D 65/00

(54) **VERPACKUNGSFOLIE**

(71) Anmelder: Constantia Teich GmbH, 3205 Weinburg (AT)
(72) Erfinder: Kornfeld, Martin, 3400 Klosterneuburg (AT); Kitzberger, Robert, 3133 Traismauer (AT); Resch, Helmut, 3203 Rabenstein (AT); Teubenbacher, Jasmin, 3205 Weinburg (AT); Schedl, Adolf, 3180 Lilienfeld (AT)
(74) Vertreter: Patentanwälte Pinter & Weiss OG

(57) **Zusammenfassung**

Um eine hitzebeständige Verpackungsfolie (1) anzugeben, bei deren Herstellung und Verwendung eine Schüsselung vermieden wird herzustellen, umfasst die Verpackungsfolie (1) eine Trägerschicht (2) und einer mit der Trägerschicht verbundenen Barriereschicht (3), welche aus einem Kunststoff gefertigt ist, wobei die Trägerschicht (2) aus Pergamin hergestellt ist und das Material der Barriereschicht (3) ausgewählt ist aus Polyestern, Polyamiden, Polyolefinen, Biopolymeren, Cellulose-Acetat, Cellulose-Hydrat, oder Kombinationen daraus.

## Beschreibung

Die gegenständliche Erfindung betrifft eine Verpackungsfolie mit einer Trägerschicht und einer mit der Trägerschicht verbundenen Barriereschicht, welche aus einem Kunststoff gefertigt ist, sowie eine aus einer erfindungsgemäßen Verpackungsfolie gefertigte Platine, eine Verpackung umfassend ein Behältnis und eine Platine, sowie ein Verfahren zur Herstellung einer Verpackungsfolie.

Viele Verpackungen für Lebensmittel umfassen ein Behältnis, z.B. aus Kunststoff, Papier, Aluminium, etc., und eine das Behältnis verschließende Platine. Als "Platine" wird ein aus einem Folienmaterial ausgestanztes Deckelelement bezeichnet. Eine Platine kann beispielsweise durch Siegeln mithilfe einer Siegelschicht mit dem Behältnis verbunden werden oder auch als Auflieger ausgeführt sein, wobei der Halt der Platine auf dem Behältnis über ein zusätzliches Deckelelement oder formschlüssig, zum Beispiel durch Umlappen, bzw. Bördeln der Ränder der Platine, sichergestellt werden kann.

Es sind aus fertigungstechnischen, anwendungsspezifischen, oder gestalterischen Gründen auch häufig mehrlagige Platinen in Form von Verpackungsfolien vorgesehen, wobei Lagen aus verschiedenen Materialien wie z.B. Aluminium, Papier, Kunststoff, etc. miteinander verbunden werden können. Dabei wird meistens eine Lage mit einem geeigneten Kaschiermittel auf eine andere Lage kaschiert, wobei die Kaschierung trennbar oder untrennbar erfolgen kann. Eine Kunststoffschicht kann in sich selbst mehrlagig sein und kann dabei auch coextrudiert ausgeführt sein.

Eine Verpackungsfolie weist eine Trägerschicht auf. Die Trägerschicht besteht oftmals aus einem Material, welches bereits selbst Barriereeigenschaften aufweist, z.B. Aluminium. Um eine aus einer Verpackungsfolie gefertigte Platine mit einem Behältnis zu verbinden, kann eine Siegelschicht, oftmals ein Polyolefin (wie Polyethylen PE oder Polypropylen PP), direkt auf die Trägerschicht aufgebracht werden.

Aus Gründen des Umweltschutzes werden Trägerschichten neuerdings jedoch anstatt aus Metall auch aus Papier oder anderen porösen oder nicht feuchtigkeitsbeständigen, und damit biologisch abbaubaren, Materialien hergestellt. Derartige Trägerschichten benötigen damit üblicherweise eine zusätzliche Barriereschicht um die Barriereeigenschaften der Verpackungsfolie zu verbessern, womit eine abdichtende Eigenschaft, beispielsweise gegen Feuchtigkeit oder Aromen, erhalten wird. Diese Barriereschichten können wiederum aus Metall, beispielsweise aus einer Aluminiumfolie oder einer aufgedampften Aluminiumschicht, gefertigt sein. Vorteilhaft ist bei einer Verpackungsfolie mit einer Trägerschicht aus Papier und einer Barriereschicht aus Metall, dass für die Fertigung der Verpackungsfolie weniger Metall verwendet werden muss, als wenn die gesamte Verpackungsfolie nur aus einer metallischen Trägerschicht besteht. Um eine aus einer Verpackungsfolie gefertigte Platine mit einem Behältnis zu verbinden, kann eine Siegelschicht somit auch auf eine vorhandene Barriereschicht aufgebracht werden. Verpackungsfolien aus Papier und/oder Metall sind siegelfähig, da sie bis zu etwa 250°C hitzebeständig sind. Als weitere Materialien in siegelfähigen Verpackungsfolien ist beispielsweise PET vorstellbar, z.B. als PET-Papier-PET-Verbund, welcher bis etwa 230°C erhitzbar ist.

Der Recyclingprozess ist bei nicht verrottbaren Verbundfolien nicht oder nur sehr schwer möglich, da miteinander verbundene Schichten, z.B. Trägerschichten und Barriereschichten, sehr schwer auftrennbar sind. Eine Trennung ist, sofern überhaupt möglich mit sehr hohen Kosten verbunden.

Verpackungsfolien werden nach ihrer Herstellung oftmals weiterverarbeitet, beispielsweise werden daraus Platinen ausgestanzt oder geschnitten, und können neben der Herstellung von Platinen auch für zahlreiche andere Anwendungen verwendet werden.

Verpackungsfolien, bei welchen eine Trägerschicht einseitig mit einer Barriereschicht verbunden werden haben sich insbesondere bei der Verwendung als Platinenmaterial als nachteilig erwiesen, da sich aufgrund der unterschiedlichen Materialeigenschaften der Trägerschicht und der Barriereschicht die Platine die Dimension ändert, d.h. sich z.B. eine Schicht ausdehnt oder zusammenzieht. So kann sich die Platine beispielsweise nach dem Ausstanzen bzw. Ausschneiden wölben, was auch als "Schüsselung" oder "Curling" bezeichnet wird. Diese Schüsselung tritt insbesondere dann auf, wenn sich die Trägerschicht nach dem Kaschieren stärker zusammenzieht als die Barriereschicht, was insbesondere bei einer Trägerschicht aus Papier mit einer Barriereschicht aus Metall der Fall sein kann. Das Ausmaß der Schüsselung wird von vielen Faktoren, beispielsweise der vorherrschenden Feuchtigkeit, beeinflusst. Eine derartige Schüsselung kann die weitere Verarbeitung der Platine oder einer anderen Verpackungskomponente, beispielsweise in einer Verpackungsmaschine, erheblich erschweren oder gar unmöglich machen.

Grundlegend gilt, dass die Probleme der Schüsselung bei unterschiedlichen physikalischen Eigenschaften der verwendeten Materialien besonders schwer in den Griff zu bekommen sind. Um eine Schüsselung zu verhindern, können die Verpackungsfolien mit einem symmetrischen Schichtprofil ausgeführt werden, etwa indem auf beiden Seiten der Trägerschicht eine identische Barriereschicht aufgebracht wird. Dies erhöht aber sowohl die Materialkosten als auch die Kosten für die Produktionsanlagen, da der Arbeitsschritt des Kaschierens zweifach ausgeführt werden muss.

Es können natürlich auch gänzlich metallfreie Verpackungsfolien gefertigt werden, um leichte und kostengünstige Platinen herzustellen. Sind Verpackungsfolien metallfrei gefertigt, so wird auch der Einsatz von Metalldetektoren zur Qualitäts- und Sicherheitskontrolle der versiegelten Verpackungen ermöglicht, beispielswese um metallische Fremdkörper zu entdecken. So kann eine Trägerschicht aus Papier mit einer Barriereschicht aus Kunststoff verbunden werden. Die zuvor erwähnte Schüsselung tritt jedoch auch bei bekannten metallfreien Verpackungsfolien auf, insbesondere bei Verbunden aus beispielsweise einer Trägerschicht aus Papier mit darauf kaschierten Barriereschichten aus Kunststoff.

Es ist zudem aus Umweltschutz- und Logistikerwägungen erwünscht, die Platinen so dünn und leicht wie möglich auszuführen. Nachteiligerweise tritt jedoch der Schüsselungseffekt gerade bei dünnen Verbundstoffen verstärkt auf.

Es ist somit eine Aufgabe der gegenständlichen Erfindung eine hitzebeständige Verpackungsfolie anzugeben, bei deren Herstellung und Verwendung eine Schüsselung vermieden wird.

Diese Aufgabe wird gelöst, indem die Trägerschicht aus Pergamin gefertigt ist und wobei das Material der Barriereschicht ausgewählt ist aus Polyestern, Polyamiden, Polyolefinen, Biopolymeren, Cellulose-Acetat, und Cellulose-Hydrat, oder Kombinationen daraus.

Die Trägerschicht weist vorzugsweise eine Grammatur zwischen 30 µm und 80 g/m auf, die Barriereschicht weist vorzugsweise eine Dicke von 5-70 µm auf.

Vorteilhafterweise ist die Trägerschicht zur Gänze aus Pergamin gefertigt. Pergamin ist ein ungeleimtes, weitgehend transparentes Material, das aus Zellstoff gefertigt wird. Pergamin ist im Gegensatz zu Papier zudem weitgehend fettdicht und kann auch (partiell) satiniert werden, beispielsweise um optische Kennzeichnungen wie z.B. Logos zu erzeugen. Werden im Produktionsprozess von Pergamin keine Weichmacher oder dergleichen, hinzugefügt, so ist Pergamin lebensmittelecht, geschmacks- und geruchsneutral, sowie aromaschützend.

Obwohl sowohl Pergamin, als auch Papier, aus Zellstoff gewonnen werden, unterscheidet sich Pergamin strukturell grundlegend von Papier, da sich die jeweils bei der Herstellung von Pergamin und Papier angewandten Faserstoffmahlarten unterscheiden. Als Faserstoffmahlung wird allgemein ein technischer Prozess zur mechanischen Modifikation von Zellulosefasern in Refinern bezeichnet.

Bei der sogenannten "röschen Mahlung", als eine Unterart der Faserstoffmahlung, werden die Zellstofffasern gekürzt, aber in ihrer sonstigen Dimension nicht verändert. Das somit hergestellte Papier ist sehr saugfähig, da viel Wasser in den hohlen Zellstofffasern eingelagert werden kann. Dabei bleiben die Zellstofffasern im Papier in eine Richtung ausgerichtet.

Für die Herstellung von Pergamin wird im Gegensatz dazu eine "schmierige Mahlung" als weitere Unterart der Faserstoffmahlung verwendet. Es wird dabei ein, in der Regel aus Nadelhölzern, gewonnener Langfaserzellstoff in einem intensiven und quetschenden Mahlverfahren zu einem schmierigen zähen Brei zermahlen und nicht verleimt. Hierbei werden die Zellstofffasern gequetscht (fibrilliert), wodurch zwischen den Zellulosemakromolekülen mehr Wasserstoffbrückenbindungen als bei Papier entstehen können. Dabei werden die Zellstofffasern zerstört, woraufhin der Faserstoff ineinander verfilzt. Der zähe Faserbrei wird weiter im Stoffauflauf auf ein Langsieb aufgebracht, wo der Faserstoff verfilzt und entwässert wird und eine nasse Pergaminbahn bildet. Diese Pergaminbahn wird in Superkalandern gewalzt, woraufhin sich eine sehr scharfe, feuchtheiße Satinage bildet, sich die Oberfläche einebnet und sich das Pergaminblattgefüge verdichtet. Die dabei entstehende dichte und durchscheinende Schicht ist zwar grundlegend aus Zellstoff gebildet, weist im Gegensatz zu Papier keine orientierten Fasern mehr auf. Dabei entsteht die für Pergamin typische hohe Glätte und Transparenz. Im Gegensatz zu beispielsweise Transparentpapier wird bei Pergamin keine zusätzliche Oberflächenleimung vorgenommen. Weiters kann dem Faserstoff während des Herstellungsverfahrens Farbstoff beigemischt werden, was auch als Massefärbung bezeichnet wird. Pergamin kann weiters nach dem Herstellungsverfahren geprägt werden und zur Entfernung von Restlignin auch chlorfrei gebleicht werden. Da die Herstellung von Pergamin grundlegend bekannt ist, wird an dieser Stelle nicht weiter darauf eingegangen.

Aufgrund seiner Transparenz wurde Pergamin bislang insbesondere als Zwischenlagenblätter in Fotoalben, als Schutzumschlag von Büchern, etc. verwendet. In Verbindung mit Lebensmitteln ist Pergamin lediglich als Trägermaterial für silikonbasiertes Backtrennpapier bekannt, wobei Silikon als Material für eine Barriereschicht ungeeignet wäre und Backtrennpapier natürlich auch keine Verpackungsfolie darstellt.

Pergamin als Trägerschicht kann somit als Rohmaterial bezogen und mit einer geeigneten Barriereschicht verbunden werden um eine Verpackungsfolie zu fertigen. Die Barriereschicht ist geeignet die Barriereeigenschaften der Verpackungsfolie zu verbessern. Das Material der Barriereschicht ist erfindungsgemäß ausgewählt aus Polyestern, Polyamiden, Polyolefinen, Biopolymeren, Cellulose-Acetat, Cellulose-Hydrat, oder Kombinationen daraus, wobei die jeweilige Auswahl auf Basis der gewünschten Materialeigenschaften erfolgen kann.

Es soll nachfolgend kurz beispielhaft auf mögliche Materialien für die aufgezählten Materialgruppen der Barriereschicht eingegangen werden, wobei natürlich auch immer jeweils Kombinationen und Mischungen aus den einzelnen Materialien möglich sind.

Als Polyester kann beispielsweise Polyethylenterephthalat (PET) dienen, wobei die Barriereschicht mit einer zusätzlichen Oberflächenbehandlung in Form einer Metallisierung oder einer anderen anorganischen Schicht, zum Beispiel aus SiOx oder AIOx, versehen sein kann.

Als Polyamide können beispielsweise PA 6 oder PA 12 dienen.

Als Polyolefine können beispielsweise Polyethylen (PE), wobei hier unterschiedliche PE-Typen (PE-LD, PE-HD, etc.), die zum Beispiel mit Ziegler-Natta-Katalysatoren oder mit Metallocen-Katalysatoren hergestellt sein können, Ethylen-Copolymere (EVA, EMA, etc.) Polypropylen (PP), PP-Copolymere, oder andere thermoplastische Polyolefine dienen.

Als Biopolymere werden Materialien, die aus biologisch abbaubaren/kompostierbaren und/oder auf Basis nachwachsender Rohstoffe produziert werden, bezeichnet. So umfassen Biopolymere: Stärkepolymere, Polymilchsäure (PLA), aus auf Lignin basierte Polymere, Polyhydroxyalkanoate (PHAs), weitere biologisch abbaubaren/kompostierbare Rohstoffe, z.B. spezielle Bio-Polyestern (zum Beispiel Ecoflex), etc.

Cellulose-Acetat ist ein modifizierter Zellstoff, der sehr umweltfreundlich ist, da er vollständig zu Wasser und Kohlendioxid CO₂ verbrennt. Zudem ist Cellulose-Acetat temperaturbeständig - kurzfristig bis zu 180°C -, gut bedruckbar und verklebbar.

Cellulose-Hydrat wird auch als Zellglas, Zellophan, Cellophan bezeichnet. Es handelt sich dabei um eine dünne, farblose und transparente Folie aus einem Celluloseregenerat. Cellulose-Hydrat kann aus Zellstoff und somit aus nachwachsenden Rohstoffen hergestellt werden. So kann Cellulose-Hydrat kompostiert und/oder wie Altpapier recycelt werden.

Die Barriereschicht kann eine Monofolie sein, d.h. aus einer Schicht bestehen, oder aus mehreren Lagen unterschiedlicher Materialien bestehen. Mehrschichtige Barriereschichten können beispielsweise kaschierte Folien sein, extrusionsbeschichtete Folien sein, oder die Barriereschicht kann eine mit mehreren Materialien coextrudierte Folie sein, um vorteilhafte Eigenschaften unterschiedlicher extrudierbarer Materialien zu kombinieren und/oder um die Oberflächeneigenschaften der Folie durch die jeweils gewählte Außenschicht zu beeinflussen. Das Hauptmaterial kann beispielsweise aus den oben für die Barriereschicht beispielhaft angeführten Materialien ausgewählt sein, oder es kann auch aus mehreren Schichten dieser Materialien, jeweils mit oder ohne Zwischenschichten (z.B. Kleber, Primer oder Haftschicht), bestehen. Auch die Beschichtung kann wiederum aus mehreren Schichten bestehen. So kann beispielsweise auf eine Schicht eines Hauptmaterials eine Co-Extrusionsbeschichtung unterschiedlicher Beschichtungsmaterialien aufgebracht sein. Das Hauptmaterial kann entweder einseitig oder beidseitig mit derselben oder mit unterschiedlichen Beschichtungen versehen sein.

Es kann zwischen Trägerschicht und Barriereschicht eine Verbindungsschicht vorgesehen sein. Insbesondere kann vor dem Kaschierverfahren oder Extrusionsverfahren ein Haftvermittler als Verbindungschicht zwischen Trägerschicht und Barriereschicht aufgebracht werden. Ist die Trägerschicht über eine Kaschierkleberschicht als Verbindungsschicht mit der Barriereschicht verbunden, so kann die Trägerschicht auch vollflächig oder teilweise mit der Kaschierkleberschicht überzogen sein kann.

Der Kaschierkleber kann ausgewählt sein aus Nasskaschier- oder Dispersionsklebern, wie etwa LANDOCOLL 7170 der Firma BEARDOWADAMS; Trockenkaschierklebern, wie etwa . Zwei-Komponenten-Systeme, umfassend Binder und Härter, wie ADCOTE™ 545 und CATALYST F der Firma DOW oder Liofol UK 3640 und UK 6800 der Firma Henkel; aus lösungsmittelfreien Klebersystemen. Weiters kann der Kaschierkleber ausgewählt sein, aus Kaltsiegelklebstoffen, wie etwa Crodaseal 22-121 der Firma Croda Adhesives, oder aus einer extrusionsbeschichteten Kaschierung. Als Kaschierkleber kann auch ein biologisch abbaubarer Kleber, wie beispielsweise der Morchem PS 255 ECO + CS-95 vorgesehen sein.

Ein Beispiel für ein vorteilhaftes Verbundmaterial für die Herstellung von Verpackungsfolien ist ein Verbund einer aus Pergamin gefertigten Trägerschicht, einem Trockenkaschierkleber als Verbindungsschicht und PLA als Barriereschicht. Damit steht eine größtenteils biologisch abbaubare Verpackungsfolie zur Verfügung.

Eine weitere vorteilhafte Materialkombination ist Pergamin als Trägerschicht, lösungsmittelfreier Kaschierkleber als Verbindungsschicht und PLA als Barriereschicht. Diese Verpackungsfolie ist in hohem Maße biologisch abbaubar.

Ein weiteres Beispiel für ein vorteilhaftes Verbundmaterial für die Herstellung von Verpackungsfolien ist ein Verbund einer aus Pergamin gefertigten Trägerschicht, einem Trockenkaschierkleber als Verbindungschicht und Polyester als Barriereschicht. Polyester hat den Vorteil einer hohen Durchstoßfestigkeit und ist daher als Barriereschicht für Verpackungsfolien besonders geeignet.

Vorteilhafterweise ist die Trägerschicht auf der der Barriereschicht abgewandten und/oder der Barriereschicht zugewandten Seite bedruckt. Weiters ist es auch möglich, die Barriereschicht zu bedrucken. Indem für das Bedrucken umweltverträgliche Farben, wie zum Beispiel Wasserfarben, verwendet werden, kann die Umweltfreundlichkeit der Verpackungsfolie weiter erhöht werden.

Vorteilhafterweise ist die Verpackungsfolie auf Seiten der Trägerschicht und/oder auf Seiten der Barriereschicht zumindest in einem Versiegelungsbereich mit einer Siegelschicht verbunden ist, wobei die Trägerschicht bzw. die Barriereschicht über einen Haftvermittler, z.B. Ethylen-Acrylsäure Copolymer, mit der Siegelschicht verbunden sein kann.

Es kann natürlich auch die Barriereschicht selbst siegelfähig sein, womit auf eine eigene Siegelschicht verzichtet werden kann.

Die gegenständliche Erfindung betrifft weiters eine Platine zum Verschließen von Behältnissen, wobei die Platine aus einer erfindungsgemäßen Verpackungsfolie gefertigt ist. Erfindungsgemäße Platinen sind umweltfreundlicher als herkömmliche Platinen und zeigen auch bei sich ändernden Umweltbedingungen, insbesondere auch bei hoher Luftfeuchtigkeit, keine Schüsselungseffekte.

Weiters betrifft die Erfindung eine Verpackung umfassend ein Behältnis und eine Platine, wobei das Behältnis mit der Platine verschlossen ist. Die Behältnisse können vorzugsweise so versiegelt werden, dass die Barriereschicht der Platinen dem Behältnisinhalt zugewandt sind. In anderen Fällen kann das Behältnis jedoch auch der Trägerschicht zugewandt versiegelt werden, wobei dann die Seite der Barriereschicht die Außenfläche bilden würde.

In einer bevorzugten Ausführungsform kann die Platine auf Seiten der Barriereschicht und/oder auf Seiten der Trägerschicht einen Versiegelungsbereich, welcher sich nicht über die ganze Oberfläche der Barriereschicht bzw. Trägerschicht erstreckt, zum Versiegeln mit dem Behältnis aufweisen.

In einem weiteren Aspekt betrifft die Erfindung ein Verfahren zur Herstellung einer Verbundfolie , wobei eine Trägerschicht aus Pergamin mit einer Barriereschicht verbunden wird und wobei das Material der Barriereschicht ausgewählt ist aus Polyestern, Polyamiden, Polyolefinen, Biopolymeren, Cellulose-Acetat, Cellulose-Hydrat, oder Kombinationen daraus.

Die Barriereschicht kann mit der Trägerschicht über ein Kaschierverfahren verbunden werden oder über ein Koextrusionsverfahren verbunden wird, wobei vor dem Koextrusionsverfahren eine Haftvermittlerschicht zwischen Trägerschicht und Barriereschicht aufgebracht werden kann.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt
Fig.1 eine Verpackungsfolie mit einer Trägerschicht und einer Barriereschicht,
Fig.2 eine Verpackungsfolie mit einer Trägerschicht, einer Barriereschicht und einer Verbindungsschicht,
Fig.3 und 4 je eine Verpackungsfolie mit einer Trägerschicht, einer Barriereschicht, einer Verbindungsschicht, und einer Siegelschicht,
Fig.5 eine aus einer Verpackungsfolie gefertigte Platine,
Fig.6 eine Verpackung, umfassend ein Behältnis und eine Platine.

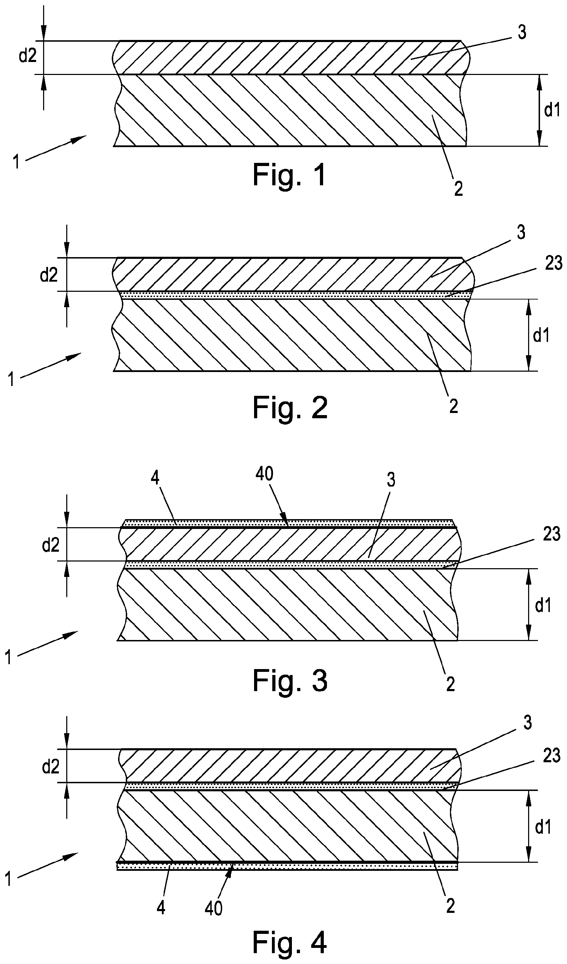

In Fig. 1 ist ein Schnitt durch eine erfindungsgemäße Verpackungsfolie 1 dargestellt. Eine Trägerschicht 2, welche aus Pergamin gefertigt ist, ist mit einer Barriereschicht 3 verbunden. Das Material der Barriereschicht 3 ist dabei ausgewählt aus Polyestern, Polyamiden, Polyolefinen (insbesondere PE oder PP), Biopolymere, Cellulose-Acetat, Cellulose-Hydrat, oder Kombinationen daraus, wobei eine aus Polymilchsäure (PLA) gefertigte Barriereschicht 3 besonders vorteilhaft ist. Die Trägerschicht 2 weist vorteilhafterweise eine Grammatur d1 zwischen 20 und 100 g/m², vorzugsweise zwischen 40 und 60 g/m² auf und die Barriereschicht 2 eine Dicke d2 zwischen 5 µm und 70 µm, vorzugsweise zwischen 30 und 50 µm und ganz besonders vorteilhafterweise eine Dicke d2 von 16, 21 oder 36 µm aufweisen.

Die Barriereschicht 3 kann dabei selbst mehrlagig ausgeführt sein, beispielsweise als coextrudierter oder kaschierte Verbund verschiedener Materiallagen. Dabei sind auch Kombinationen der obigen Materialen möglich.

In Fig. 2 ist ein Schnitt durch eine Verpackungsfolie 1 dargestellt, wobei die Trägerschicht 2 über eine Verbindungsschicht 23, welche eine Kaschierkleberschicht oder eine Haftvermittlerschicht darstellen kann, mit der Barriereschicht 3 verbunden ist.

Fig. 3 hingegen zeigt die Verpackungsfolie 1 aus in Fig. 2, welche zudem auf der der Trägerschicht abgewandten Seite der Barriereschicht 3 ganzflächig mit einer Siegelschicht 4 verbunden ist. Die Siegelschicht 4 könnte natürlich auch nur in einem Versiegelungsbereich 34, statt ganzflächig, vorgesehen sein. Es könnte zusätzlich oder stattdessen auch die Verpackungsfolie 1 auf der der Barriereschicht 3 abgewandten Seite der Trägerschicht 2 (ganzflächig oder in einem Versiegelungsbereich 34) mit einer Siegelschicht 4 verbunden sein, wie in Fig. 4 dargestellt. In Fig. 3, wie auch in Fig. 4 ist ebenso zusätzlich ein Haftvermittler 40 zwischen Siegelschicht 4 und Barriereschicht 3, bzw. Trägerschicht vorgesehen. Auf die Siegelschicht 4 könnte in Fig. 3 insbesondere verzichtet werden, wenn die Barriereschicht 3 selbst bereits siegelfähig ist. Selbstverständlich kann die Verpackungsfolie 1 auch zusätzliche, über die in Fig.3, bzw. Fig. 4 dargestellten Schichten hinausgehende, Schichten, z.B. (Punkte)Lack, Abstandshalter, etc., aufweisen.

Auch die Siegelschicht 4 könnte mehrlagig ausgeführt sein, beispielsweise als coextrudierter oder kaschierter Verbund. Typische Materialien für die Siegelschicht 4 sind Polyolefine, wie PP oder PE (auch in den verschiedenen Typen). Auch hier können die einzelnen Lagen aus verschiedenen Materialien ausgeführt sein.

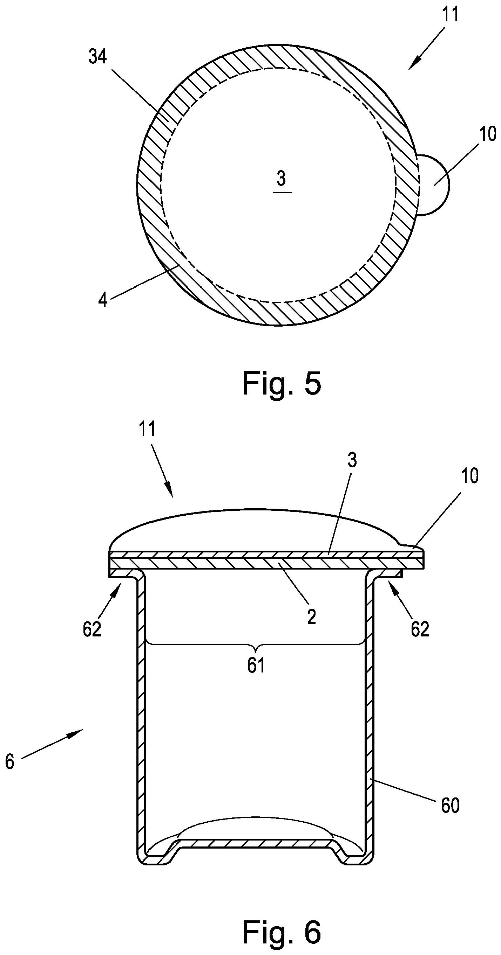

In Fig.5 ist eine Draufsicht einer Platine 11 zum Verschließen eines Behältnisses 60 dargestellt, wobei die Platine 11 aus einer erfindungsgemäßen Verpackungsfolie 1 gefertigt, vorzugsweise ausgestanzt, ist. Die Verpackungsfolie 1 kann wie oben beschrieben aufgebaut sein. Die Platine 11 weist vorteilhafterweise eine Grifflasche 10 auf, die sich über den eigentlichen, z.B. runden, Bereich der Platine 11 hinausragt. Es ist die Barriereschicht 3, die mit der Trägerschicht 2 (nicht sichtbar) verbunden ist, ersichtlich, wobei mit der Barriereschicht 3 in einem schraffiert dargestellten Versiegelungsbereich 34 eine Siegelschicht 4 verbunden ist. Die Siegelschicht 4 könnte wie erwähnt natürlich auch die gesamte Barriereschicht 3, bzw. Platine 11 bedecken und/oder wie in Fig. 4 dargestellt an der Trägerschicht 2 ganzflächig, oder auch in einem Siegelbereich 23 aufgebracht sein. Es können natürlich auch weitere Schichten, wie eine Verbindungsschicht 23 zwischen Trägerschicht 2 und Barriereschicht 3, etc. vorgesehen sein.

Fig. 6 zeigt eine Verpackung 6 umfassend ein Behältnis 60 und eine Platine 11, wobei das Behältnis 60 mit der Platine 11 verschlossen ist. Die Platine 11 umfasst in Fig. 6 eine Trägerschicht 2 und eine Barriereschicht 3, kann natürlich mit der Barriereschicht 3 zum Behältnis platziert werden und/oder auch weitere Schichten, wie oben beschreiben, aufweisen. Die Platine 11 verschließt eine Öffnung 61 des Behältnisses 60, indem sie in bekannter Weise an einem Umfangsrand 62 des Behältnisses 60 angeordnet ist. Die Platine 11 weist vorteilhafterweise eine Grifflasche 10 auf, die über den Umfangsrand 62 des Behältnisses 60 hinausragt. Vorteilhafterweise erfolgt die Verbindung der Platine 11 mit dem Behältnis 60 über ein Heisssiegelverfahren, wobei die Platine 11 eine siegelfähige, dem Behältnis 60 zugewandte, siegelfähige Schicht, z.B. eine siegelfähige Barriereschicht 3 oder eine Siegelschicht 4 (die an der Barriereschicht 3 oder der Trägerschicht 2 aufgebracht sein kann) aufweisen kann. Die Siegelschicht 4 muss dabei mit dem Umfangsrand 62 in Verbindung gebracht werden, wobei die Siegelschicht 4 vorzugsweise in einem Siegelbereich 34 aufgebracht ist, der dieselben Abmessungen wie der Umfangsrand 62 des Behältnisses 60 aufweisen kann. Die Siegelung dient dazu, die Platine 11 mit dem Behältnis 60, dichtend zu verbinden. Zum Versiegeln wird in bekannter Weise die Platine 11, vorteilhafterweise in einem Siegelbereich 34, mit einem Siegelwerkzeug unter Aufbringung eines Siegeldrucks und einer Siegeltemperatur gegen den Rand des zu verschließenden Behältnisses 60 verschlossen. Übliche Siegeldrücke liegen dabei im Bereich von etwa 2-4 bar, allgemein bei etwa 3 bar. Die Siegeltemperatur kann bei herkömmlichen Siegelschichten 4 beispielsweise zwischen 120 C° und 290 C°, meist zwischen 180 °C und 250 °C liegen. Beim Versiegeln werden auch allfällige Hohlräume und Kanülen, die zwischen der Barriereschicht 3 und der Trägerschicht 2 verblieben sind, abgeschlossen und dicht verschweißt, womit keine Verunreinigungen oder Mikroben in das Innere der Verpackung 6 eindringen könnten.

Es sind natürlich auch andere Möglichkeiten des Verschließens des Behältnisses 60 mit der Platine 11 möglich, wie über ein zusätzliches Deckelelement oder formschlüssig, zum Beispiel durch Umlappen der Ränder der Platine 11, etc.

## Patentansprüche

1. Verpackungsfolie (1) mit einer Trägerschicht (2) und einer mit der Trägerschicht verbundenen Barriereschicht (3), welche aus einem Kunststoff gefertigt ist, **dadurch gekennzeichnet, dass** die Trägerschicht (2) aus Pergamin hergestellt ist, **und dass** das Material der Barriereschicht (3) ausgewählt ist aus Polyestern, Polyamiden, Polyolefinen, Biopolymeren, Cellulose-Acetat, Cellulose-Hydrat, oder Kombinationen daraus.

2. Verpackungsfolie (1) nach Anspruch 1, **dadurch gekennzeichnet, dass** die Barriereschicht (3) aus Polymilchsäure (PLA) gefertigt ist.

3. Verpackungsfolie (1) nach Anspruch 1 oder 2, **dadurch gekennzeichnet, dass** die Trägerschicht (2) über eine Verbindungsschicht (23), vorzugsweise eine Kaschierkleberschicht oder eine Haftvermittlerschicht, mit der Barriereschicht (3) verbunden ist.

4. Verpackungsfolie (1) nach einem der Ansprüche 1 bis 3, **dadurch gekennzeichnet, dass** die Verpackungsfolie (1) auf Seiten der Trägerschicht (2) und/oder auf Seiten der Barriereschicht (3) zumindest in einem Versiegelungsbereich (34) mit einer Siegelschicht (4) verbunden ist.

5. Verpackungsfolie (1) nach Anspruch 4, **dadurch gekennzeichnet, dass** die Trägerschicht (2) bzw. die Barriereschicht (3) über einen Haftvermittler (40) mit der Siegelschicht (4) verbunden ist.

6. Verpackungsfolie (1) nach einem der Ansprüche 1 bis 5, **dadurch gekennzeichnet, dass** die Barriereschicht (3) siegelfähig ist.

7. Verpackungsfolie (1) nach einem der Ansprüche 1 bis 6, **dadurch gekennzeichnet, dass** die Trägerschicht eine Grammatur (d1) zwischen 20 g/m² und 100 g/m², vorzugsweise zwischen 40 und 60 g/m², aufweist, **und dass** die Barriereschicht (2) eine Dicke (d2) zwischen 5 µm und 70 µm, vorzugsweise zwischen 30 und 50 µm aufweist.

8. Platine (11) zum Verschießen von Behältnissen (60), gefertigt aus einer Verpackungsfolie (1) gemäß einem der Ansprüche 1 bis 7.

9. Verpackung (6) umfassend ein Behältnis (60) und eine Platine (11) nach Anspruch 7, wobei das Behältnis mit der Platine (11) verschlossen ist.

10. Verfahren zur Herstellung einer Verpackungsfolie (1), **dadurch gekennzeichnet, dass** eine Trägerschicht (2) Pergamin mit einer Barriereschicht (3) verbunden wird, wobei das Material der Barriereschicht (9) ausgewählt ist aus Polyestern, Polyamiden, Polyolefinen, Biopolymeren, Cellulose-Acetat, Cellulose-Hydrat, oder Kombinationen daraus.

11. Verfahren nach Anspruch 10, **dadurch gekennzeichnet, dass** die Barriereschicht (3) mit der Trägerschicht (2) über ein Kaschierverfahren verbunden wird.

12. Verfahren nach Anspruch 10, **dadurch gekennzeichnet, dass** die Barriereschicht (3) mit der Trägerschicht (2) über ein Koextrusionsverfahren verbunden wird.

13. Verfahren nach Anspruch 11, **dadurch gekennzeichnet, dass** vor dem Koextrusionsverfahren eine Haftvermittlerschicht zwischen Trägerschicht (2) und Barriereschicht (3) aufgebracht wird.

## Geänderte Patentansprüche

### Geänderte Patentansprüche gemäss Regel 137(2) EPÜ.

1. Verpackungsfolie (1) mit einer Trägerschicht (2) und einer mit der Trägerschicht verbundenen Barriereschicht (3), welche aus einem Kunststoff gefertigt ist, wobei die Trägerschicht (2) aus Pergamin hergestellt ist, **dadurch gekennzeichnet dass** das Material der Barriereschicht (3) ausgewählt ist aus Polyestern, Stärkepolymeren, Polymilchsäuren, auf Lignin basierten Polymeren, Polyhydroxyalkanoaten, Cellulose-Acetat, Cellulose-Hydrat, oder Kombinationen daraus.

2. Verpackungsfolie (1) nach Anspruch 1, **dadurch gekennzeichnet, dass** die Trägerschicht (2) über eine Verbindungsschicht (23), vorzugsweise eine Kaschierkleberschicht oder eine Haftvermittlerschicht, mit der Barriereschicht (3) verbunden ist.

3. Verpackungsfolie (1) nach Anspruch 1 oder 2, **dadurch gekennzeichnet, dass** die Verpackungsfolie (1) auf Seiten der Trägerschicht (2) und/oder auf Seiten der Barriereschicht (3) zumindest in einem Versiegelungsbereich (34) mit einer Siegelschicht (4) verbunden ist.

4. Verpackungsfolie (1) nach Anspruch 3, **dadurch gekennzeichnet, dass** die Trägerschicht (2) und/oder die Barriereschicht (3) über einen Haftvermittler (40) mit der Siegelschicht (4) verbunden ist.

5. Verpackungsfolie (1) nach einem der Ansprüche 1 bis 4, **dadurch gekennzeichnet, dass** die Barriereschicht (3) siegelfähig ist.

6. Verpackungsfolie (1) nach einem der Ansprüche 1 bis 5, **dadurch gekennzeichnet, dass** die Trägerschicht eine Grammatur (d1) zwischen 20 g/m² und 100 g/m², vorzugsweise zwischen 40 und 60 g/m², aufweist, **und dass** die Barriereschicht (2) eine Dicke (d2) zwischen 5 µm und 70 µm, vorzugsweise zwischen 30 und 50 µm aufweist.

7. Platine (11) zum Verschießen von Behältnissen (60), gefertigt aus einer Verpackungsfolie (1) gemäß einem der Ansprüche 1 bis 6.

8. Verpackung (6) umfassend ein Behältnis (60) und eine Platine (11) nach Anspruch 6, wobei das Behältnis mit der Platine (11) verschlossen ist.

9. Verfahren zur Herstellung einer Verpackungsfolie (1), **dadurch gekennzeichnet, dass** eine aus Pergamin gefertigte Trägerschicht (2) mit einer Barriereschicht (3) verbunden wird, wobei das Material der Barriereschicht (9) ausgewählt ist aus Polyestern, , Stärkepolymeren, Polymilchsäuren, auf Lignin basierten Polymeren, Polyhydroxyalkanoaten, Cellulose-Acetat, Cellulose-Hydrat, oder Kombinationen daraus.

10. Verfahren nach Anspruch 9, **dadurch gekennzeichnet, dass** die Barriereschicht (3) mit der Trägerschicht (2) über ein Kaschierverfahren verbunden wird.

11. Verfahren nach Anspruch 9, **dadurch gekennzeichnet, dass** die Barriereschicht (3) mit der Trägerschicht (2) über ein Koextrusionsverfahren verbunden wird.

12. Verfahren nach Anspruch 10, **dadurch gekennzeichnet, dass** vor dem Koextrusionsverfahren eine Haftvermittlerschicht zwischen Trägerschicht (2) und Barriereschicht (3) aufgebracht wird.
